# EUROPEAN PATENT APPLICATION

(11) **EP 4 726 670 A1**
(43) Date of publication of application: **15.04.2026**
(21) Application number: 24206539.9
(22) Date of filing: 14.10.2024
(51) Int. Cl.: G06V 10/764, G06V 10/774, G06V 10/80, G06V 20/56, G06V 20/64, G06V 20/70

(54) **A METHOD FOR TRAINING AND/OR TESTING A MACHINE LEARNING SYSTEM**

(71) Applicant: Robert Bosch GmbH, 70442 Stuttgart (DE); CARIAD SE, 38440 Wolfsburg (DE)
(72) Inventor: Kugele, Alexander, 70806 Kornwestheim (DE); Borges, Julio, 70176 Stuttgart (DE); Laube, Kevin Alexander, 72108 Rottenburg am Neckar (DE); Cheng, Shin-I, 70190 Stuttgart (DE)
(74) Representative: Bösherz Goebel Patentanwälte

(57) **Abstract**

The invention relates to a method (100) for training and/or testing a machine learning system (50), comprising:
- Providing (101) images (70) and corresponding instance segmentation specifications (75), wherein the instance segmentation specifications (75) specify single instances of objects shown in the images (70),
- Predicting (102) semantic specifications (80), wherein the semantic specifications (80) provide at least one semantic class for each of the images (70),
- Analysing (103) the instance segmentation specifications (75) and the semantic specifications (80) based on statistics between an overlap of the specified object instances and the provided semantic classes,
- Mapping (104) the single instances of the objects to the semantic classes based on the analysis (103).

## Description

The invention relates to a method for training and/or testing a machine learning system. Furthermore, the invention relates to a computer program, an apparatus, and a storage medium for this purpose.

### State of the art

Training deep learning models usually performs better, the more data is provided during training. More data during validation on the other hand increases trust in the model and allows to better understand its advantages and shortcomings. Ideally, one has access to huge amounts of error-free labels, which enables supervised learning.

However, obtaining such data is resource- and time-consuming. Especially for vision tasks, an attractive alternative is therefore to collect data using a computer rendering framework. This enables the creation of a rich set of scenarios, under the assumption that one has access to a database of many different 3D assets.

However, even for these 3D assets, one must know their respective semantic classes in the same label space as used everywhere else. This allows to render the correct semantic segmentation (per-pixel class annotation) of the scene, together with the actual scene itself.

### Disclosure of the invention

According to aspects of the invention a method with the features of claim 1, a computer program with the features of claim 9, a data processing apparatus with the features of claim 10 as well as a computer-readable storage medium with the features of claim 11 are provided. Further features and details of the invention are disclosed in the respective dependent claims, the description and the drawings. Features and details described in the context to the method according to the invention also correspond to the computer program according to the invention, the data processing apparatus according to the invention as well as the computer-readable storage medium according to the invention, and vice versa in each case.

According to an aspect of the invention a method for training and/or testing a machine learning system is provided that comprises, particularly in the form of automatically carried-out method steps:
- Providing images and corresponding instance segmentation specifications, wherein the instance segmentation specifications specify single instances of objects shown in the images,
- Predicting semantic specifications, wherein the semantic specifications provide at least one semantic class for each of the images,
- Analysing the instance segmentation specifications and the semantic specifications, particularly based on statistics between an overlap of the specified object instances and the provided semantic classes,
- Mapping the single instances of the objects to the semantic classes based on the analysis, particularly based on a degree of the overlap.

In other words, it is possible to improve the training and/or testing of machine learning systems by analysing the relationship between instance segmentation specifications and the predicted semantic classes. This provides a way to refine the mapping of object instances to their corresponding semantic categories based on statistical analysis of overlaps. The resulting improved mapping can lead to more accurate training data, enhancing the overall performance of the machine learning system.

Access to large amounts of training data with error-free labels is beneficial for supervised learning. Therefore, for providing the images, they may be collected using a computer rendering framework. This makes it possible to create a variety of scenarios, especially if access to a database with many different 3D objects is provided. But even for these 3D assets, it is often necessary to know their respective semantic classes in the same labelling space that is used throughout the process. Then is it possible to render the correct semantic segmentation (i.e. class labelling per pixel or per-pixel class annotation) of the scene together with the actual scene. This is often of great importance for many technical applications.

The semantic specifications, particularly in the form of semantic segmentation, can be a pixel-accurate labelling of the rendered image that outperforms even human annotations. This proposed approach may enable the fast and cost-effective generation of a variety of high-quality labels.

It is one advantage of the invention that it may automatize the described asset labelling step. To this end, a semantic segmentation model may be used that predicts the semantic specifications, particularly semantic segmentation, of each of the images (i.e. which semantic class each pixel belongs to), and/or a classification model which predicts only a single class for the entire image, with a set of classes that is at least similar to the final labels that are used for the computer-generated semantic segmentation.

For each 3D asset that requires automated labelling, a set of 2D views may be rendered and the aforementioned segmentation or classification model may be used to predict the semantic class of the asset.

If a segmentation model is used, a majority-vote over the predictions on each pixel that belongs to the asset may be applied.

That the aforementioned approach may be also feasible if the asset is part of a complex scene, if instance segmentation labels are available. These labels can be used to crop an image to the desired region, or run the majority-vote of segmentation models only on the pixels belonging to the asset(s) in question.

It is also possible to use this data to improve the semantic segmentation model, and as a result improve the label mapping iteratively via self-training.

The invention may have the further advantage to reduce the manual (human) effort to label assets, which has become a significant and costly expenditure due to the abundance of 3D assets that are nowadays available.

Another advantage may be that no manual labeling effort and no manual mapping from manually-defined classes (asset labeling) to the final target classes (used to train downstream models) may be necessary.

Furthermore, it can be another advantage that there are no ambiguities when one asset is used for multiple objects with potentially different labels. For example, the same "wheel" asset could be used for a car and for a motorcycle, which in this example should be labelled into these two classes. Manual labelling could only label it as one class or the other. The method according to the invention may change the label prediction on a perimage basis (if desired), or, learn about groups of labels (in the example: if "wheel" is close to "rider" -> motorcycle, else, car.) The resulting semantic segmentation can be a pixel-perfect label of the rendered image, surpassing even human annotations. This allows for a fast and cheap generation of abundant high-quality labels.

It is also possible that the method further comprises:
- Selecting at least one of the objects shown in the images for automated labelling, wherein preferably the respective at least one selected object is provided in a three-dimensional (3D) form, particularly as a three-dimensional virtual asset,
- Rendering a set of two-dimensional views for each of the selected objects,
- Performing the prediction of the semantic specifications for each of the views, wherein particularly a majority-vote is carried out over the predictions,
- Performing the analysis and mapping based on the performed predictions.

It is thereby possible to enhance the training and/or testing process by incorporating 3D assets, also referred to as three-dimensional object compositions. This allows for a more comprehensive representation of object structure and relationships within a scene, leading to improved training data. Multiple 2D views may be rendered for each selected 3D object composition, enabling the prediction of semantic specifications for each view. A majority-vote approach may be used to consolidate these predictions, resulting in a refined semantic classification for the entire three-dimensional object.

It is further possible that the images are at least partially generated by a computer rendering framework. Furthermore, the objects shown in the images may be generated based on a database of object templates and/or different three-dimensional assets. It is an advantage that using computer-generated images introduces greater control over the training data. The ability to generate specific objects and scenes based on templates and 3D assets allows for the creation of diverse and representative datasets. Furthermore, computer-generated images offer the advantage of scalability. Generating large quantities of synthetic data is significantly faster and more cost-effective compared to manually collecting real-world images. This scalability can be crucial for training complex machine learning models that require extensive amounts of labelled data.

It is also possible that the images are at least partially computer-generated based on a database of object templates with associated template classes that are used to classify the object templates. In other words, each of the object templates may be classified by assigning one of the template classes to the object template. Furthermore, the generated images may show different object compositions. Each of the compositions, i.e. particularly combinations, may comprise a plurality of objects based on the object templates. Also, the semantic classes of the predicted semantic specifications associated with the object compositions may differ at least partially from the template classes associated with (i.e. assigned to) the individual object templates that contribute to the object compositions. It is thereby possible to generate diverse training data by leveraging a database of object templates and their corresponding semantic classes in a first step. The system can create images with various object combinations in the next step based on these templates, leading to a rich dataset where predicted semantic classes may diverge from the individual template classifications due to the complex interactions within the compositions. This approach enhances the model's ability to handle real-world scenarios with intricate object relationships and variations.

It is further possible that training data is created based on the images and/or the objects shown in the images and on basis of the mapping. Furthermore, the training data may be used for the training and/or testing of the machine learning system. Particularly, the images may represent traffic scenes, thereby providing the training data for machine learning of a classification of digital sensor images based on pixels of the images in at least partially autonomous driving and/or driver assistant applications for a vehicle. It is possible that this enables the creation of highly specific and relevant training data for machine learning models used in autonomous driving or driver-assistance systems.

It is also possible that the prediction of the semantic specifications comprises a classification of the images based on pixels of the images. This pixel-level classification enables the model to precisely delineate object boundaries and/or to assign accurate semantic labels to every part of the image.

It is further possible that the semantic specifications are configured as semantic segmentation specifications that segment the images based on different semantic classes. Consequently, the semantic specifications utilize a segmentation approach to categorize pixels in the images into distinct semantic classes, allowing for a more detailed and precise representation of the image content. This finer-grained classification can enhance the machine learning model's understanding of object relationships.

It is also possible that the semantic specifications are predicted by a classification model that predicts only one single class for each of the images. This approach simplifies the model training process by focusing on single-class prediction per image.

The invention may be used for the training and/or testing and/or improvement of a machine-learning system, particularly machine-learning model. The trained machine-learning system may be used to classify sensor data such as digital images (e.g., received based on a sensor detection using video, radar, LiDAR, ultrasonic, motion, or thermal sensors) using techniques like video and/or audio analysis and/or regression and/or classification, which may also enable the detection of traffic signs, road surfaces, pedestrians, vehicles and other objects that can be created as 3D assets.

It is possible for the method according to the invention to be used in a vehicle. The vehicle may, for example, be designed as a motor vehicle and/or passenger vehicle and/or at least partially automated/autonomous vehicle. The vehicle can have a vehicle device, e.g. for providing an autonomous driving function and/or a driver assistance system. The vehicle device can be designed to control and/or accelerate and/or brake and/or steer the vehicle at least partially automatically.

The machine learning system, in particular in the form of a machine learning model, is preferably trained for classification and in particular for object detection. The training can be intended to train the machine learning system / the machine learning model by means of a training data set for classification, in particular for image classification, of image data such as digital images on the basis of pixels and/or pixel values, preferably edges or pixel attributes (of the image data). The image data or digital images can, for example, result from a recording by at least one sensor, preferably at least one camera, preferably of a vehicle and particularly preferably of a camera environment and/or vehicle environment during driving (the vehicle). The classification can be intended to recognise objects in an environment depicted by the image data or digital images and/or to recognise a traffic scene.

Classification may be provided for various technical applications. One example is the application in a vehicle. Based on the classification, in particular at least one classification result, at least one control action, preferably for a vehicle or for another technical system, may be initiated and/or carried out.

A classification result of the classification may comprise and/or be specific to at least one of the following results: a category of objects, an identification of objects, a position of objects and/or obstacles (e.g. in the direction of travel or next to the direction of travel), a presence of obstacles, a description of a traffic scene, a hazard or warning message, a number of objects, a type and/or position of lane markings and/or a lane boundary, a position and/or a status of traffic signalling systems, a position of a lane, or the like.

At least one control action for the vehicle may be initiated and/or carried out on the basis of the classification result. The control action may comprise at least one of the following: braking, steering, accelerating, overtaking manoeuvres, emergency braking, activation of an alarm system, activation of a hazard warning system, activation of a direction indicator, light control, or the like.

Classification can be used to recognise an obstacle, for example, regardless of whether it is directly in the direction of travel or next to it. Depending on the location (e.g. depending on the expected vehicle trajectory), a corresponding control action such as braking or swerving can be initiated.

For example, braking can also be initiated if the classification indicates that there are obstacles in the direction of travel and/or a collision is likely. It is also conceivable that a lane and/or a lane boundary could be recognised on the basis of the classification in order to move the vehicle at least partially automatically on the lane as a result of the control action.

The 'classification' and 'image classification' can also include 'object detection' or 'object detection in images'. In particular, this means classifying whether or not there are objects in certain areas of the image. In addition, the terms 'classification' and 'image classification' can also refer to 'semantic segmentation', in particular in the form of pixel-by-pixel classification.

In another aspect of the invention, a computer program may be provided, in particular a computer program product, comprising instructions which, when the computer program is executed by at least one computer, cause the computer to carry out the method according to the invention. Thus, the computer program according to the invention can have the same advantages as have been described in detail with reference to a method according to the invention.

In another aspect of the invention, an apparatus for data processing may be provided, which is configured to execute the method according to the invention. As the apparatus, for example, a computer can be provided which executes the computer program according to the invention. The computer may include at least one processor that can be used to execute the computer program. Also, a non-volatile data memory may be provided in which the computer program may be stored and from which the computer program may be read by the processor for being carried out.

According to another aspect of the invention a computer-readable storage medium may be provided which comprises the computer program according to the invention and/or instructions which, when executed by a computer, cause the computer to carry out the steps of the method according to the invention. The storage medium may be formed as a data storage device such as a hard disk and/or a non-volatile memory and/or a memory card and/or a solid state drive. The storage medium may, for example, be integrated into the computer.

Furthermore, the method according to the invention may be implemented as a computer-implemented method. Alternatively or additionally, at least one of the disclosed method steps may be computer-implemented and/or automated.

Further advantages, features and details of the invention will be apparent from the following description, in which embodiments of the invention are described in detail with reference to the drawings. In this context, the features mentioned in the claims and in the description may each be essential to the invention individually or in any combination. Showing:
- Fig. 1:: A method, computer program, a storage medium and apparatus according to embodiments of the invention.
- Fig. 2: Further details of the method according to embodiments of the invention.

The method 100 according to embodiments of the invention can transform views of a 3D asset generated with a rendering software into semantic segmentation maps that can be used to train a machine-learning system like the segmenter or a downstream model that is used for semantic segmentation or similar tasks. The views of the 3D asset may be provided by computer-generated images that are used as a basis for the method 100. In the context of the invention, computer-generated images may refer to images generated with a rendering software that is able to render a scene of 3D assets. Concrete examples for this software is Blender or CARLA. A segmenter 230 may refer to a computer program like an algorithm/model/neural network that predicts a class per pixel in an image.

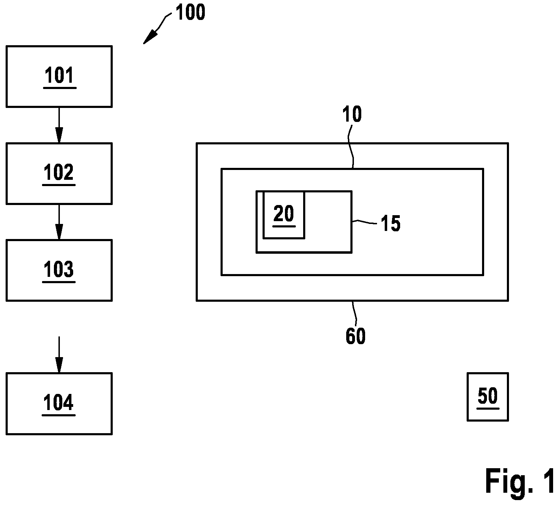

According to Fig. 1, the method according to embodiments of the invention is shown in more details. In general, the method 100 may be used for a training and/or testing of a machine learning system 50. According to a first method step 101, images 70 may be provided together with corresponding instance segmentation specifications 75. The instance segmentation specifications 75 may specify single instances of objects shown in the images 70. Then, according to a second method step 102, a prediction of semantic specifications 80 may be carried out, wherein the semantic specifications 80 provide at least one or more semantic class for each of the images 70. Afterwards, according to a third method step 103, an analysis of the instance segmentation specifications 75 and the semantic specifications 80 may be performed based on statistics between an overlap of the specified object instances and the provided semantic classes. For example, to this end, it is analysed what pixels of the images that belong to a specific object instance belong to what semantic classes that have been predicted. Then, according to a fourth method step 104, a mapping 104 of the single instances of the objects to the semantic classes based on the analysis 103 may be carried out, particularly by a digital allocation table.

Fig. 1 also shows a computer program 20 comprising instructions which, when the computer program 20 is executed by at least one computer 10, particularly located in a vehicle 60, cause the computer 10 to carry out the method 100 according to embodiments of the invention. Additionally, a corresponding computer-readable storage medium 15 is shown that may comprise the computer program 20.

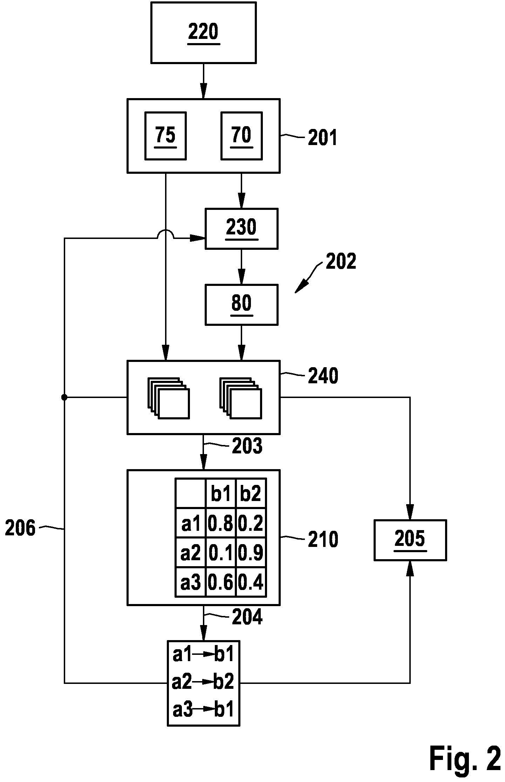

The steps of the method according to embodiments of the invention are outlined in more detail in Fig. 2.

According to a first step 201, images and instance segmentation maps may be generated using a computer generation program 220. While simpler scenes are preferrable to ensure result quality, the invention conceptually may also work on complex scenes. The instance segmentation may be configured as a 2D map, where each pixel is associated with one particular object.

According to a second step 202, the segmentation model 230 may be used to obtain semantic segmentations from the images, thus obtain pairs 240 of pixel-perfect instance segmentation (given by the rendering engine) with potentially imperfect per-pixel class predictions (given by the segmentation model).

According to a third step 203, statistics between the overlap of the instance segmentation and the classes of the semantic segmentation may be calculated. The statistics can be accumulated image-wise, or for all images together. Common methods would be a confusion matrix 210, by handling each pixel individually, or, using measures like mean intersection-over-union.

According to a fourth step 204, the statistics may be used to map the instances to semantic classes. Common ways to map would be to use the majority vote or weighted random sampling. This enables to use the pixel-perfect semantic annotation (i. e. the labelled data) to train the segmenter 230, or another model that is used in an application (see 205).

Optionally, the segmenter can be updated with the newly labelled data in step 206.

The above explanation of the embodiments describes the present invention in the context of examples. Of course, individual features of the embodiments can be freely combined with each other, provided that this is technically reasonable, without leaving the scope of the present invention.

## Claims

1. A method (100) for training and/or testing a machine learning system (50), comprising:
- Providing (101) images (70) and corresponding instance segmentation specifications (75), wherein the instance segmentation specifications (75) specify single instances of objects shown in the images (70),
- Predicting (102) semantic specifications (80), wherein the semantic specifications (80) provide at least one semantic class for each of the images (70),
- Analysing (103) the instance segmentation specifications (75) and the semantic specifications (80) based on statistics between an overlap of the specified object instances and the provided semantic classes,
- Mapping (104) the single instances of the objects to the semantic classes based on the analysis (103).

2. The method (100) of claim 1, **characterized in that** the method (100) further comprises:
- Selecting at least one of the objects shown in the images (70) for automated labelling, wherein the respective at least one selected object is provided in a three-dimensional form, particularly as a three-dimensional virtual asset,
- Rendering a set of two-dimensional views for each of the selected objects,
- Performing the prediction (102) of the semantic specifications (80) for each of the views, wherein particularly a majority-vote is carried out over the predictions,
- Performing the analysis (103) and mapping (104) based on the performed predictions (102).

3. The method (100) of any one of the preceding claims, **characterized in that** the images (70) are at least partially generated by a computer rendering framework, and the objects shown in the images (70) are generated based on a database of object templates and/or different three-dimensional assets.

4. The method (100) of any one of the preceding claims, **characterized in that** the images (70) are at least partially computer-generated based on a database of object templates with associated template classes to classifying the object templates, and wherein the generated images (70) show different object compositions, and each of the compositions comprises a plurality of objects based on the object templates, wherein the semantic classes of the predicted semantic specifications (80) associated with the object compositions differ at least partially from the template classes associated with the individual object templates that contribute to the object compositions.

5. The method (100) of any one of the preceding claims, **characterized in that** training data is created based on the images (70) and/or the objects shown in the images (70) and the mapping (104), wherein the training data is used for the training and/or testing of the machine learning system (50), wherein the images (70) represent traffic scenes, thereby providing the training data for machine learning of a classification of digital sensor images based on pixels of the images (70) in at least partially autonomous driving or driver assistant applications for a vehicle (60).

6. The method (100) of any one of the preceding claims, **characterized in that** the prediction (102) of the semantic specifications (80) comprises a classification of the images (70) based on pixels of the images (70).

7. The method (100) of any one of the preceding claims, **characterized in that** the semantic specifications (80) are configured as semantic segmentation specifications that segment the images (70) based on different semantic classes.

8. The method (100) of any one of the preceding claims, **characterized in that** the semantic specifications (80) are predicted by a classification model that predicts only one single class for each of the images.

9. A computer program (20), comprising instructions which, when the computer program (20) is executed by a computer (10), cause the computer (10) to carry out the method (100) of any one of the preceding claims.

10. A data processing apparatus (10), comprising means for carrying out the method (100) of any one of claims 1 to 8.

11. A computer-readable storage medium (15) comprising instructions which, when executed by a computer (10), cause the computer (10) to carry out the steps of the method (100) of any one of claims 1 to 8.
